# EUROPEAN PATENT SPECIFICATION

(11) **EP 2 572 426 B1**
(45) Date of publication and mention of the grant of the patent: **18.06.2014**
(21) Application number: 11701227.8
(22) Date of filing: 19.01.2011
(51) Int. Cl.: H02J 3/48, F03D 9/00, F03D 7/02

(54) **ARRANGEMENT FOR GENERATING A CONTROL SIGNAL FOR CONTROLLING A POWER OUTPUT OF A POWER GENERATION SYSTEM**
ANORDNUNG ZUR ERZEUGUNG EINES STEUERSIGNALS ZUR STEUERUNG EINER LEISTUNGSABGABE EINES STROMERZEUGUNGSSYSTEM
SYSTÈME ADAPTÉ POUR GÉNÉRER UN SIGNAL DE COMMANDE DANS LE BUT DE CONTRÔLER UNE PUISSANCE DE PRODUCTION D'ÉNERGIE D'UN SYSTÈME DE PRODUCTION D'ÉNERGIE

(30) Priority: 13.08.2010 EP 10172783
(43) Date of publication of application: 27.03.2013
(73) Proprietor: Siemens Aktiengesellschaft, 80333 München (DE)
(72) Inventor: ANDRESEN, Björn, DK-8752 Ostbirk (DK); BJERGE, Martin Huus, DK-6933 Kibæk (DK); EGEDAL, Per, DK-7400 Herning (DK); KUMAR, Sathees, DK-7400 Herning (DK)
(86) International application number: PCT/EP2011/050649
(87) International publication number: WO 2012/019785

(56) References cited:
- EP-A1- 1 914 419
- WO-A1-2010/000663
- US-A1- 2009 167 021
- US-B2- 7 345 373

## Description

### Field of invention

The present invention relates to an arrangement for generating a control signal for controlling a power output of a power generation system and to a power generation system including the arrangement. In particular, the present invention relates to an arrangement for generating a control signal for controlling a power output of a power generation system and to a power generation system, which is adapted to stabilize oscillations of a frequency of a utility grid to which the power generation system is supposed to supply electric energy.

### Art Background

One or more power generation systems, such as wind turbines, may be connected to a utility grid to supply electric energy to the utility grid. On the other hand, one or more consumers or loads are connected to the utility grid to extract electric energy from the utility grid. The utility grid may deliver the electric energy in form of a AC power stream (or signal or electromagnetic wave) which have a predetermined nominal grid frequency, such as 50 Hz or 60 Hz. Thereby, the grid frequency may highly depend on the balance of generated and consumed power. This balance of generated and consumed power is necessary to keep the frequency stable, but due to outage, generation loss and sudden increase in power a variation in frequency is often observed.

US 7,345,373 B2 discloses a system and method for utility and wind turbine control, wherein a flow of power through the converter is modulated in response to frequency disturbances or power swings of the utility system relative to an internal reference frame which is implemented as an integrator that emulates a virtual inertia with a particular magnitude defined by the constant M. Thereby, the internal reference frame has an output that is variable and is the frequency of the internal reference frame. A relative frequency is obtained as a difference of a measured frequency (measured utility system frequency) and the frequency of the internal reference frame. In particular, the frequency of the internal reference frame may differ from the utility system during frequency disturbances. Other arrangements for controlling the power output of power generation systems are disclosed in US 2009/167021 and WO 2010/000663.

### Summary of the Invention

There may be a need for an arrangement for generating a control signal for controlling a power output of a power generation system and for a power generation system which provides improved control in case of frequency oscillations of the utility grid; and allows estimation or measuring of an expected lifetime of the power generation system.

This need may be met by the subject matter according to the independent claims. Advantageous embodiments of the present invention are described by the dependent claims.

According to the present invention an arrangement for generating a control signal for controlling a power output of a power generation system, in particular a wind turbine, is provided, wherein the power output is to be supplied to a utility grid, wherein the arrangement comprises an input terminal (such as an electrical input terminal or an input node) for receiving an input signal (such as an electrical signal, such as an analogue signal or a digital signal) indicative of an actual grid frequency (i.e. a momentary frequency of the utility grid, in particular comprising one or more values, in particular at different time points, of the frequency, wherein the one or more values may indicative of a time course of the actual frequency of the utility grid) of the utility grid (to which the power generation system supplies energy and from which one or more consumers extract electrical energy); a control circuit (in particular comprising one or more integrated circuits, and/or a computer, a computer program being executed on the computer) for generating the control signal (in particular an electrical control signal, such as an analogue signal or a digital signal), wherein the control circuit comprises a first circuit for generating a time derivative value (indicating a change of the input signal with respect to time, wherein in particular the input signal may be continuously measured or measured at a number of sample points being spaced in time relative from each other); and an output terminal (or an output node) to which the control signal is supplied, wherein the control signal depends (in particular is based on, in particular changes if the time derivative value of the input signal changes) on the generated time derivative value of the input signal.

The arrangement further comprises a load determination unit (in particular comprising measurement equipment, a computer and/or a computer program running on the computer) for determining, (a) based on the control signal and/or (b) based on both a power output and a nominal power output of the power generation system, a load (in particular a mechanical load and/or an electrical load) of the power generation system (the load for example comprising a load in a gear or a bearing of the rotor shaft), wherein the load determination unit comprises a counter for counting a number of times the control signal caused an increase of the power output of the power generation system (or wherein the counter is also adapted for measuring a time interval or a plurality of time intervals the control signal caused an increase of the power output of the power generation system), in particular for counting a number of times the control signal caused an increase of the power output of the power generation system above the nominal power output (wherein in particular the counter is also adapted for measuring a time interval or a plurality of time intervals the control signal caused an increase of the power output of the power generation system above the nominal power output, wherein the nominal power output may also be referred to as rated power output defining a power output during normal continuous operation of the power generation system).

The load determination unit may allow to estimate or measure an accumulated load the power production system or wind turbine system is subjected to. Further, the load determination unit may allow estimation or measuring of an expected lifetime of the power generation system, in particular the wind turbine. Further, the measurements or estimations of the load determination unit may be taken into account for generating the control signal. Thus, the control signal may be generated also to be based on a load determined by the load determination unit. Thereby, the control of the power generation system regarding its power output may be improved.

The control signal may also be denoted as inertia response signal in the context of the present application. In particular, the control signal may be supplied to a wind turbine controller which in turn generates based on the control signal a power reference signal to be supplied to a converter of the wind turbine for controlling a power output of the converter (and thus of the wind turbine) depending on the power reference signal.

In particular, the control signal may be generated to cause an increase of active power output of the power generation system, when the actual grid frequency falls below a certain limit. Further in particular, the control signal may be generated to cause reduction of power production by the power generation system, when the actual grid frequency exceeds the fixed nominal frequency (such as 50 Hz or 60 Hz) of the utility grid.

In particular, the wind turbine may be equipped with a full-scale converter, effectively decoupling the rotor side from the grid. In particular, the wind turbine may comprise a tower, a nacelle mounted on top of the tower, and a rotor rotatably supported within the shaft, wherein at the rotor one or more rotor blades are mounted. The rotor shaft may mechanically be coupled to a generator for generating electric energy when the rotor shaft rotates due to wind impacting on the rotor blades.

In particular, the generator of the wind turbine may generate variable frequency AC power signals (or a AC power stream) which may be supplied to the full-scale converter. The full-scale converter may first convert the variable frequency power signal to a DC power signal and may then convert the DC power signal to a fixed frequency power signal having the frequency of the utility grid under normal conditions, i.e. the nominal grid frequency. In particular, the converter may be capable of controlling a power output of the wind turbine, in particular may be adapted for decoupling the inertia of the rotor from the grid. In particular, the grid may not have a direct link to the inertia of the revolving mass of the rotor.

According to an embodiment kinetic energy, such as rotational energy of the rotor is extracted during a particular grid event, such in case when the actual grid frequency is below the nominal predetermined grid frequency. In particular, an additional active power may be delivered to the utility grid during grid drop events to stabilize the utility grid frequency. In particular, active power of the energy stored in the rotor may be injected into the utility grid in such a way that the frequency decay is pulled towards the nominal grid frequency. According to an embodiment the control signal is generated such that the wind turbine controller finally supplied with a signal based on the control signal controls the wind turbine or the wind turbine converter such as to prevent further declination of the grid frequency.

Taking into account the time derivative value of the input signal facilitates fast response when the grid frequency changes, in particular changes in a rapid way. Thereby, a stabilization of the grid frequency may be achieved. Such a fast response may not be possible with conventional controllers. In particular, the derivative value of the input signal may be obtained as a difference of the input signal at a second time point and the input signal at a first time point, wherein the first time point precedes the second time point. In particular, a time difference between the first time point and the second time point may be adapted according to the particular operational condition or the particular requirements, such as local regulations.

According to embodiments, the time derivative (df/dt) may be controlled instead of the absolute frequency. The purpose of this feature may be to minimize the rate of frequency declination during a frequency drop and reach a quicker break-off. This may be achieved by feeding more active power into the grid in such a way that df/dt goes toward df/dt=0.

The input signal which is indicative of the actual grid frequency may in particular represent for example as an electrical value the actual grid frequency or may alternatively represent a deviation of the actual grid frequency from a fixed nominal grid frequency. In particular, the input terminal of the arrangement may comprise a first input terminal for receiving a first input signal representing the actual grid frequency and the arrangement or the input terminal may further comprise a second input terminal for receiving a second input signal representative or representing a deviation of the actual grid frequency from the fixed nominal grid frequency.

The actual grid frequency may in particular be measured to generate a measurement signal which may then be transformed in an appropriate way (for example digitized) and/or filtered for finally obtaining the input signal for the control arrangement.

According to an embodiment the arrangement further comprises a first filter (such as a cut-off filter for filtering the input signal regarding frequency components comprised in the input signal) connected between the input terminal and the first circuit (such that the first circuit is supplied with a first filtered version of the input signal), wherein the first filter is adapted to attenuate a frequency component of the input signal having a frequency higher than a first threshold frequency. In particular, the input signal may be supplied to the first filter and the first filter may output a first filtered input signal, wherein in the filtered input signal frequency components above the first threshold frequency are attenuated (such as by between 50% and 100%) compared to the same frequency components in the not filtered input signal.

In particular, the input signal may be based on measurements of the grid frequency, wherein these measurements may contain errors, such as noise. In particular, the noise in the measurements may comprise relatively high frequency components. Thereby, in particular the noise due to inaccurate measurements of the grid frequency may be reduced in the first filtered input signal compared to the unfiltered input signal. Thereby, the influence of inaccuracy of the measurements of the actual grid frequency and thus the influence of noise in the input signal may be reduced by supplying the first filtered input signal to the first circuit. In particular, the first circuit may be sensitive to noise.

Filtering the input signal using the first filter having a cut-off frequency at the first threshold frequency may be accompanied by a first delay time interval being a time delay of the first filtered input signal, wherein the first time delay interval may be equal to the inverse of the first threshold frequency. In particular, the first delay time interval may amount to between 5 s and 10 s. In turn, the first threshold frequency may be relatively low.

In particular, the first threshold frequency may be determined based on an accuracy of the actual utility grid frequency measurements. For example, the unfiltered input signal may comprise large spikes of the measured actual grid frequency which are due to measurement errors and which spikes may be reduced in the first filtered input signal. Thereby, the control signal may be generated in a more accurate way.

According to an embodiment, the input signal is indicative of a deviation of the actual grid frequency from a fixed nominal grid frequency, wherein the arrangement in particular comprises a comparator such as a logic circuit for determining the frequency deviation of the actual grid frequency from the fixed nominal grid frequency. Including a comparator for determining the frequency deviation may allow generating the control signal based on the frequency deviation. This in particular may allow inclusion of further control elements into the arrangement which are sensitive to the absolute value of the input signal.

According to an embodiment, the control circuit comprises a second circuit (also called a second control element) for generating a time integrative value (e.g. obtained be forming an integral or a sum of the input signal over a particular time interval) of the input signal, wherein the control signal further depends on the generated time integrative value (in particular obtained by forming a sum or integral of the input signal from a first time point to a second time point, in particular comprising forming a sum of a plurality of input signals associated to the actual grid frequency at a plurality of time points). In particular, in this case the input signal may represent the deviation of the actual grid frequency from the fixed nominal grid frequency.

Thus in particular the deviation of the actual grid frequency from the fixed nominal grid frequency may be considered as an error signal and the control signal may be generated such that the error signal is reduced or even minimized. Inclusion of the second circuit for generating the time integrative value of the input signal may further improve the control of the power output of the power generation system to stabilize the actual grid frequency.

According to an embodiment, the arrangement further comprises a second filter (such as a cut-off filter, in particular an analogue filter) connected between the input terminal and the second circuit (such that from the input signal a second filtered input signal is generated and supplied to the second circuit), wherein the second filter is adapted to attenuate a frequency component of the input signal having a frequency higher than a second threshold frequency, wherein in particular the second threshold frequency is greater than the first threshold frequency. In particular, the second filter may allow to reduce measurement errors in the input signal. Thereby, the stabilization of the grid frequency may be improved.

In particular, the filtering by the second filter to output the second filtered input signal may be accompanied by delaying the second filter input signal relative to the input signal by a second delay time interval, which may in particular correspond to an inverse of the second threshold frequency.

According to an embodiment, the control circuit comprises a third circuit (also referred to as third control element) for generating a proportional value of the input signal, wherein the control signal further depends on the generated proportional value (being a value formed by a product of the input signal and a factor, wherein the factor may be constant) of the input signal. Thereby, the generating the control signal may be performed such that the controlled power output leads to an improved stabilization of the grid frequency. According to an embodiment, the arrangement further comprises a third filter (in particular a cut-off filter) connected between the input terminal and the third circuit (such that from the input signal a third filtered input signal is generated and supplied to the third circuit), wherein the third filter is adapted to attenuate a frequency component of the input signal having a frequency higher than a third threshold frequency, wherein the third threshold frequency is in particular greater than the first threshold frequency. In particular, in the third filtered input signal, frequency components greater than the third threshold frequency may be reduced in amplitude compared to the same frequency components in the unfiltered input signal. In particular, filtering the input signal using the third filter to output the third filtered input signal may be accompanied by delaying the third filtered input signal by a third delay time interval which may be related to the third threshold frequency, which may in particular be the inverse of the third threshold frequency. In particular, also the third filter may reduce measurement errors in the input signal to output the third filtered input signal to be supplied to the third circuit.

In particular the second delay time interval and/or the third delay time interval may amount to between 100 ms and 2 s, in particular between 500 ms and 1 s. Further, the second threshold frequency and/or the third threshold frequency may depend on the particular application, the particular requirements and/or local regulations.

According to an embodiment, at least one of the first filter, the second filter and the third filter comprises a low pass filter, in particular a first order analogue filter. In particular, a first order low pass filter may have a gain slope with respect to angular frequency of -20 dB/decade. In particular, the first order filter may reduce the signal amplitude by half every time the frequency doubles. The cut-off frequency may be defined as the frequency at the intersection point of the line (of the filter characteristics) having the slope -20 dB/decade and the line having a constant gain (in particular having gain 0 dB) in the passband. In particular, the gain of the first order filter drops by 20 dB when the frequency increases from a first frequency at or above the cut-off frequency to a second frequency which equals 10 times the first frequency.

According to an embodiment, the control signal is based on a weighted sum of the proportional value, the time integrative value and the time derivative value of the input signal. Thus in particular a PID controller may be provided comprised in the arrangement for generating the control signal. The relative weights of the proportional value, the time integrative value and the time derivative value may be determined by simulation or may be determined by trial and error and/or training data. In particular, the relative weights may be determined such that the deviation of the actual grid frequency from the predetermined fixed nominal grid frequency is reduced under a number of operational conditions. In particular, the relative weights may be determined in an iterative way.

According to an embodiment, the arrangement is selectively operable in a first mode and in a second mode, wherein in the first mode a weight of the proportional value of the input signal and a weight of the time integrative value of the input signal are both below a weight threshold (in particular are essentially zero), while the weight of the time derivative value of the input signal is one. In particular, in the first mode only the derivative value of the input signal is taken into account to generate the control signal but not the proportional value and not the integrative value of the input signal. Thus, from the proportional value, the integrative value and the derivative value of the input signal exclusively the derivative value of the input signal is taken into account for generation of the control signal. In particular, it may be manually switched into the first mode under particular requirements or conditions, in particular depending on local regulations.

In the second mode all three, the proportional value, the integrative value and the derivative value of the input signal are taken into account for generation of the control signal.

According to an embodiment, the arrangement further comprises a limiting circuit connected between the control circuit and the output terminal for limiting the control signal to be below a predetermined change per time (such that a change of the control signal within a particular time interval is below a change threshold) and/or to be in a predetermined range (a range of values of the control signal), wherein the predetermined range is 0.0 to 0.2, in particular 0.0 to 0.1, times a nominal power output (also referred to as a rated power output, i.e. a power output of the power generation system, in particular the wind turbine, for continuous operation or normal operation) of the power generation system. Thereby it may be avoided that the power generation system is operated under conditions the power generation system is not designed to operate in. Thereby, a lifetime of the power generation system may be increased.

According to an embodiment, the predetermined range depends on an actual power supplied by the power generation system to the utility grid and/or on a kinetic energy of the mechanical portion of the power generation system. Thereby, it may be possible to make inertial response deliveries more efficient as the inertia response signal (or control signal) may depend on how much power the turbine is delivering (pre-frequency dip) and how much kinetic energy is stored in the generator rotor.

Alternatively, the static limiting circuit may be a simple implementation how much active power the turbine is able to provide which may highly depend on the active power delivered to the grid (just before the inertial response) and the generator rotational speed.

According to an embodiment, the arrangement is adapted to communicate with a power generation plant controller (such as a wind farm controller HPPP) controlling a plurality of power generation systems, including the power generation system, regarding their power outputs (such that the power generation plant controller in a normal operation transmits control signals to the power generation systems to control their power output), wherein in particular the control signal is communicated to the power generation plant controller. Thereby, it is enabled that the power generation plant controller may take the control signal into account which may prevent the power generation plant controller to counteract.

In particular, as an example, a wind farm may be set to produce 50 MW at a point of common connection (PCC). Suddenly, a frequency drop may occur and the wind turbines may inject more power into the utility grid resulting in an increase in power at the PCC, such as an increase to 54 MW. The wind farm controller (also referred to as power generation plant controller) may detect this increased power at the PCC and may determine that the power at the PCC is 4 MW above the rated power. Further, the wind farm controller may reduce its power reference set point to the turbine. To avoid such an unwanted scenario the opportunity of communication between the wind turbine and the wind farm controller is provided according to an embodiment.

According to an embodiment, a power generation system, in particular a wind turbine system, for supplying electrical power to a utility grid is provided, wherein the power generation system comprises an arrangement for generating a control signal for controlling a power output of the power generation system according to one of the above described embodiments; and a generator and/or converter arranged to receive the control signal (or a signal generated based on the control signal, e.g. using a further wind turbine controller) and to adapt the power output in dependence of the control signal. In particular, the control signal may be supplied to an additional wind turbine controller which in turn supplies a signal, in particular a power reference signal, to the generator and/or the converter.

In particular, the control signal may be used by the converter to trigger conducting states of one or more semiconductor switches, such as IGBTs, which control the flow of power through the converter. In particular, the converter may receive a variable frequency AC power signal from the generator (which may be mechanically coupled to the rotor shaft having rotor blades fixed thereto) to a DC power signal using one or more semiconductor switches, such as isolated gate bipolar transistors (IGBTs). The DC power signal may then be converted by the converter using one or more IGBTs to a fixed frequency AC power signal having a frequency close to the fixed nominal grid frequency. Controlling the conducting states of the IGBTs comprised in the converter may allow controlling flow of power through the IGBT into the utility grid. Thereby, the frequency oscillations in the utility grid may be decreased.

According to an embodiment, the control signal is generated such that the power generation system is caused to increase its power supply to the utility grid (thus to increase the power output of the power generation system), when the actual grid frequency is below the nominal grid frequency, in particular longer than a predetermined time interval and/or such that the power generation system is caused due to decrease the power output of the power generation system to the utility grid, when the actual grid frequency is above the nominal grid frequency, in particular longer than a further predetermined time interval.

It should be understood that features (individually or in any combination) disclosed, described, used for or mentioned in respect to the description of an embodiment of an arrangement for generating a control signal for controlling a power output of a power generation system may also be (individually or in any combination) applied, used for, or employed for a method for generating a control signal for controlling a power output of a power generation system.

According to an embodiment a method for generating a control signal for controlling a power output of a power generation system, in particular a wind turbine, is provided, wherein the power output is to be supplied to a utility grid, wherein the method comprises: (a) receiving an input signal indicative of an actual grid frequency of the utility grid; (b) generating the control signal using a control circuit, wherein the control circuit comprises a first circuit for generating a time derivative value of the input signal; and (c) supplying the control signal at an output terminal, wherein the control signal depends on the generated time derivative value of the input signal.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings to which the invention is not limited.
Fig. 1 schematically illustrates an arrangement for generating a control signal for controlling a power output of a power generation system according to an embodiment;
Fig. 2 illustrates a graph illustrating generating a time derivative value to be used in the arrangement illustrated in Fig. 1 according to an embodiment;
Fig. 3 schematically illustrates a control operation unit according to an embodiment for controlling a converter for converting electrical energy;
Fig. 4 schematically illustrates a portion of a power generation plant including a power generation system controlled by the arrangement illustrated in Fig. 1;
Fig. 5 illustrates a graph of an actual grid frequency according to a conventional method and according to an embodiment of a method for generating a control signal for controlling a power output of a power generation system; and
Fig. 6 illustrates a characteristics of a filter comprised in the arrangement illustrated in Fig. 1;
Fig. 7 schematically illustrates a part of the arrangement of Fig. 1 for generating a control signal for controlling a power output of a power generation system according to an embodiment;
Fig. 8 schematically illustrates a part of the arrangement of Fig. 1 for generating a control signal for controlling a power output of a power generation system according to an embodiment;
Fig. 9 schematically illustrates a park layout of a wind farm;
Figs. 10 and 11 schematically illustrate adjustment curves provided by the wind park controller of Fig. 9.

### Detailed Description

The illustration in the drawings is in schematic form. It is noted that in different figures, similar or identical elements are provided with the same reference signs or with reference signs, which are different from the corresponding reference signs only within the first digit.

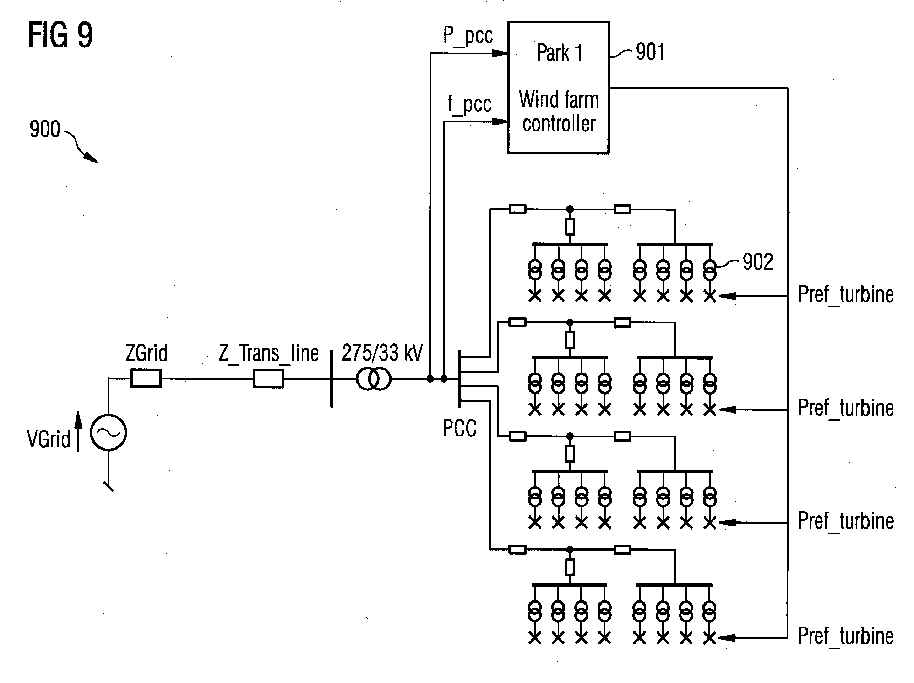

In Fig. 9, a common park layout of a wind farm 900 is shown. In this wind farm, the frequency control is controlled on park level. That means that the grid frequency is monitored at the Point Of Common Coupling (PCC) and an active power production is controlled by the wind farm controller 901. Decrease or increase of active power depends on the droop characteristic parameter in the wind farm controller. The actual frequency f_pcc and the actual power P_pcc measured at the PCC are provided to the wind farm controller 901. The controller is adapted to send a control signal Pref_turbine to each wind turbine 902. The wind turbines will then change the production of active power in accordance with the control signal, i.e. increase the production when the frequency falls below a certain limit and reduce the power production if the frequency raises above a certain limit.

The wind farm in Fig. 9 has three PCC points. The frequency is measured at these points and sent to the wind farm controller. The wind farm controller is taking the frequency measurement from PCC and corresponding active power references are distributed to the wind turbines. If the frequency is too low the reference power Pref_turbine send to the turbines will increase and while the reference power Pref_turbine is reduced if the frequency is too high.

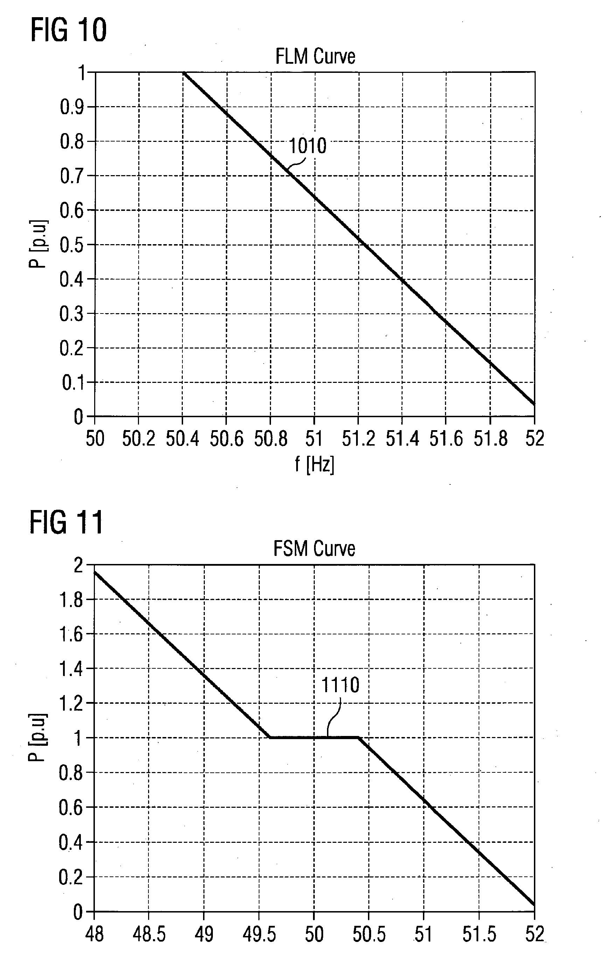

The wind farm controller may adjust according to the curves shown in Figs. 10 and 11. Two different setups may be possible with the wind farm controller shown in Fig. 9: Frequency Limited Mode FLM (Fig. 10) and Frequency Sensitive Mode FSM (Fig. 11). The FLM only reacts on frequency increase above 50.4 Hz (graph 1010) for example while FSM reacts on both frequency fall and rise as shown with graph 1110. The slope dP/df is defined by the droop factor which determines the amount of active power increase or decrease due to grid frequency changes.

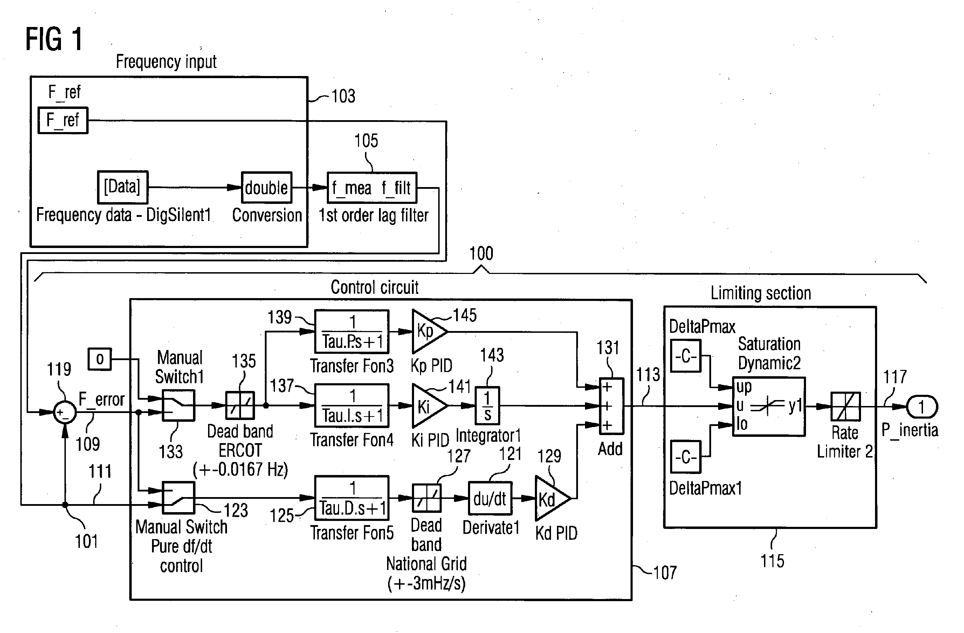

Fig. 1 schematically illustrates an arrangement 100, according to an embodiment, for generating a control signal (also referred to as P_inertia) for controlling a power output of a not illustrated power generation system, in particular a wind turbine. The arrangement 100 comprises an input terminal 101 for receiving an input signal indicative of an actual grid frequency f_mea of the utility grid. In particular, the actual grid frequency is measured using a measurement unit 103 which generates a grid frequency measurement signal f mea which is filtered using a first order lag filter 105 to provide the filtered grid frequency signal f_filt to the input terminal 101.

The arrangement 100 further comprises a control circuit 107 to which the filtered grid frequency signal f_filt is supplied and to which also a deviation of the filtered signal f_filt of the actual grid frequency signal f_mea from a frequency reference F_ref is supplied, wherein the reference frequency F_ref corresponds to the nominal fixed (i.e. not variable) grid frequency, such as 50 Hz or 60 Hz.

The deviation F_error of the filtered actual grid frequency from the nominal grid frequency is supplied via a signal line 109 and the filtered actual grid frequency signal is supplied via a signal line 111 to the control circuit 107.

Based on the input signal (which may be either the measured actual grid frequency or a filtered signal of the actual measured grid frequency or a deviation thereof from the nominal frequency) the control circuit determines and generates a preliminary control signal at a control line 113 which preliminary control signal is input to a limiting section 115 which is also comprised in the arrangement 100. The limiting section 115 (also referred to as limiting circuit) outputs the control signal at an output terminal 117. The control signal is also referred to as P_inertia or inertial response signal.

The deviation of the actual grid frequency from the nominal grid frequency is determined by a comparator 119 which provides the deviation F_error of the actual grid frequency from the predetermined fixed nominal grid frequency at the signal line 109 to the control circuit 107.

In Fig. 1 the control circuit 107 is illustrated in a first mode, wherein the input signal is only applied to a first circuit 121 connected between the input terminal 101 and the output terminal 117. In particular, in the first mode a switch 123 connects the input terminal 101 to a first filter 125 which provides a first filtered input signal to a dead band element 127 which in turn provides the filtered input signal to the first circuit 121. The first circuit 121 derives a derivative value of the input signal which is then multiplied using a multiplier 129 and is supplied to an adder 131.

In particular, a delay accompanied by filtering the input signal using the first filter 125 amounts to between 5 s and 10 s. The filter 125 reduces the noise in the input signal, wherein the noise may be due to the measurement process of the grid frequency. In particular, the filter 125 attenuates a frequency component of the input signal having a frequency higher than a first threshold frequency which may be related to a reverse of the delay introduced by the filter 125.

In a second mode of operation of the arrangement 100 the switch 123 connects the first filter 125 to the signal line 109 providing the input signal indicative of a deviation F_error of the actual grid frequency from the fixed predetermined nominal grid frequency. Further, the switch 133 also connects the input signal applied at signal line 109 to a dead band element 135 which provides its output to,a second filter 137 and in parallel to a third filter 139. The second filter 137 generates a second filtered input signal, supplies it to a multiplier 141, wherein the multiplier 141 multiplies the second filtered input signal with a constant Ki and supplies the result to an integrator 143 which integrates the received signal over a certain time interval and supplies the result to the adder 131.

Further, the third filter 139 generates from the input signal a third filtered input signal, supplies it to the multiplier 145 which multiplies the third filtered input signal by a factor Kp and supplies the result to the adder 131.

In particular, the adder 131 forms a weighted sum (weighted by the multiplication factors Kd, Ki and Kp) of a derivative value (wherein the derivative value is generated by the derivative element 121) of the input signal, of the integrative value of the input signal (wherein the integrative value is generated by the integrator 143) and of the proportional value of the input signal (wherein the proportional value is generated by the multiplier 145). The weighted sum of the derivative value, the integrative value and the proportional value of the input signal is supplied via the signal line 113 to the limiting section 115 which ensures that the control signal supplied to the output signal 117 lies within a predetermined range, such as in a range from 0.0 to 0.2 times a nominal control signal and that the rate change (the change with respect to time) of the control signal is also in a particular range.

In particular, the nominal grid frequency F_ref is a fixed frequency and is not determined based on emulating a synchronous machine. In particular, a wind turbine system may comprise the arrangement 100 as illustrated in Fig. 1, wherein the arrangement 100 controls the power output of the wind turbine. The arrangement 100 enables for controlling the wind turbine to rapidly provide additional power to the utility grid in case the frequency of the utility grid falls below the nominal frequency, in order to stabilize the grid frequency. In particular, the control of the power output at each particular power generation system, in particular wind turbine, may be faster than a control via a central park controller. In particular, the control signal P_inertia is generated on the basis of a measured frequency input representing the actual frequency of the utility grid. Further, the actual frequency is filtered using a first order filter 105 before the input signal is supplied to the PID controller 107. In particular, the signal provided by the integrator 143 may be limited in such a way that it does not diverge, for example with anti-wind up which is not illustrated in Fig. 1. Further, the control signal provided at the output terminal 117 is limited by a dynamic or static limiting section 115, as there are limits for the magnitude of the control signal P_inertia.

In particular, the limiting section may be adapted as a static limiter in which case the control signal may be limited to have values between 0 and 0.1 times a nominal power reference signal or inertial response signal. This may be a very simple implementation.

Alternatively, the limiting section 115 may be adapted as a dynamic limiter, since in some cases the power generation system may be able to provide more active power to the grid than the nominal power. How much active power the turbine is able to provide may highly depend on the active power delivered to the grid and the generator speed. The dynamic limiter makes the inertial response delivery more efficient, as the control signal P_inertia may depend on how much power the turbine is delivering and how much kinetic energy is stored in the generator rotor.

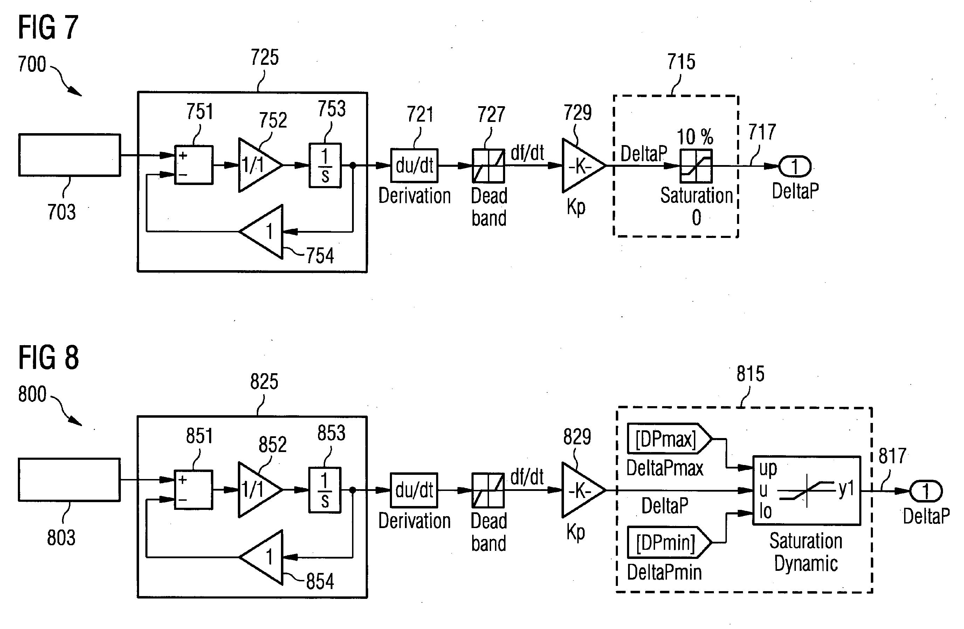

Figs. 7 and 8 illustrate schematically the first mode of the arrangement of Fig. 1. In one embodiment, the arrangement may be used for example only in the first mode, wherein the other parts of the arrangement as shown in Fig. 1 might be omitted.

The idea of the first mode is to provide a df/dt controller which reacts with respect to frequency change per second and not the absolute frequency. The objective of the controller is not to drive the frequency back to 50/60 [Hz], but to make df/dt = 0 fast as possible.

In Figs. 7 and 8, the arrangement comprises a measurement system 703/803. The measurement system may be adapted for providing any raw measurement data like the actual measured frequency. These measurement data may be provided as input signal to a filter 725/825, for example a first order filter. The filter may be adapted to filter out noise, for instance high frequency noise. In particular, the filter 725/825 may be a low pass filter. The filter comprises an adder 751/851 receiving the input signal and a feedback signal. The output of the adder is supplied to a multiplier 752/852. The output of the multiplier is supplied to an integrator 753/853. The output of the integrator is supplied to a further multiplier 754/854 providing the feedback signal and to a derivative unit 721/821.

The derivative unit derives a derivative value of the signal inputted to the derivative unit. Subsequently, the output of the derivative unit, is supplied to a dead band unit 727/827 for filtering out the signal range where no action occurs. The remaining range may be for example 3 to -3 mHz/s. After that, the output signal of the dead band unit is supplied to a multiplier 729/829. In Figs. 7 and 8, the derivative unit and the dead band element are shown in this order, but it could also be possible to rearrange these elements as shown in Fig. 1.

The multiplied signal is supplied to a limiting circuit 715/815. The limiting circuit outputs the control signal at an output terminal 717/817. The control signal is also referred to as P_inertia, DeltaP or inertial response signal.

In Fig. 7, the limiting circuit 715 is shown as a static limiter. In this case, the signal may be limited to have a value between 0 and 0.1·Pnom. The saturation may be set to for example 10% as shown in Fig. 7. This is a simple implementation, but it isn't the most efficient solution as the SWT in some cases might be able to provide more active power to the grid. How much active power the turbine is able to provide highly depends on the active power delivered to the grid (just before inertial response) and the generator speed.

In Fig. 8, the limiting circuit 815 is shown as a dynamic limiter. This type of limiter may provide the inertial response deliveries more efficient as the P_inertia will depend on how much power the turbine is delivering (pre-frequency dip) and how much kinetic energy is stored in the generator rotor. The dynamic saturation may depend on the generator speed and may be adapted dynamically based on the actual measured information. A maximum (DeltaPmax) and minimum (DeltaPmin) value may be supplied to the limiting circuit.

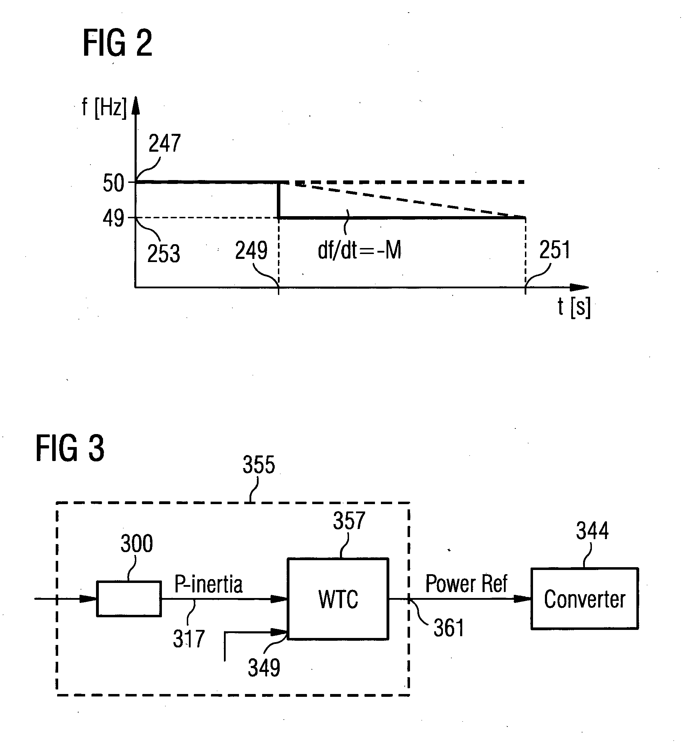

Fig. 2 illustrates a graph showing on its abscissa the time t in seconds and showing on its ordinate the actual frequency f of the utility grid in Hertz (Hz). In the illustrated example the nominal grid frequency amounts to 50 Hz, as labelled by reference sign 247. Between a first time point 249 and a second time point 251 the frequency f drops from 50 Hz to a value of 49 Hz, as indicated by reference sign 253. In particular, a derivative value df/dt of the frequency (thus the input signal supplied to the control circuit 107) amounts to -M which is determined by the derivative element 121 illustrated in Fig. 1. Weighted by the factor Kd this derivative value of the input signal contributes to the weighted sum which is formed by the adder 131, as illustrated in Fig. 1. In particular, taking into account the derivative value of the input signal may accelerate controlling the power output of the power generation system compared to a conventional method. Thereby, the grid frequency may be more efficiently stabilized to be close to the nominal grid frequency.

Fig. 3 schematically illustrates controlling a wind turbine converter 344 using a power controller 355. The power controller 355 comprises the arrangement 300 for generating a control signal for controlling a power output of a power generation system, wherein the arrangement 300 may be adapted as the arrangement 100 illustrated in Fig. 1. The control signal P_inertia output by the arrangement 300 at the output terminal 317 is supplied to a wind turbine controller 357 to which additional measurement values and parameters are input at an input terminal 349. Taking the control signal P_inertia into account the wind turbine controller 357 generates a power reference signal PowerRef at its output terminal 361 to supply the power reference signal to the converter 344 which adapts its power output according to the supplied power reference signal.

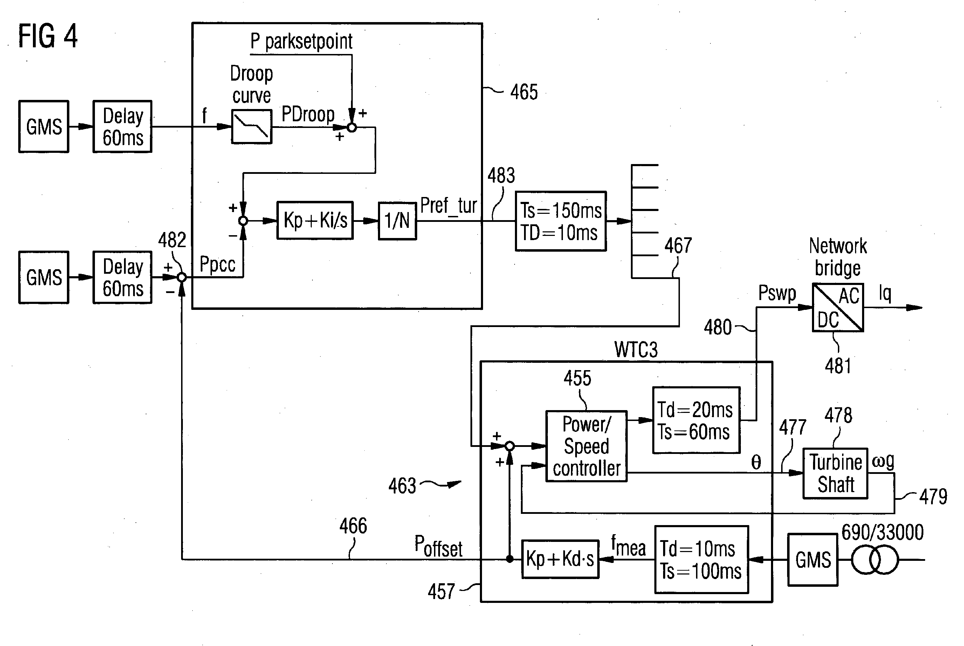

Fig. 4 schematically illustrates a portion of a power generation plant including one or more power generation systems 463 (from which only one power generation system is illustrated in Fig. 4), wherein a high performance park pilot or power generation plant controller 465 controls the power generation systems 463. Each power generation system 463, such as a wind turbine system, comprises a controller 457 including a power controller 455 which may be adapted as the power controller 355 illustrated in Fig. 3, wherein the power controller 455 comprises an arrangement 100 for generating a control signal for controlling a power output of the power generation system 463. As is indicated by control and/or communication lines 466 and 467 the power controller 455 and in particular also the arrangement 100 comprised within the power controller 455 is enabled to communicate with the power generation plant controller 465, in order to communicate in particular the control signal P_inertia being provided at the output terminal 117 of the arrangement 100. Thereby, the power generation plant controller 465 may take the control signal into account in order not to counteract. Thereby, stabilization of the grid frequency may be achieved more quickly or more accurately. The controller 455 outputs a control signal 477 to the turbine shaft 478 which provides a feed back signal 479 to the controller 455. The power is provided via line 480 to a network bridge 481 which converts the power signal to fixed frequency.

The power generation plant controller 465 receives an input signal from the point of common coupling 482 and outputs a control signal at terminal 483.

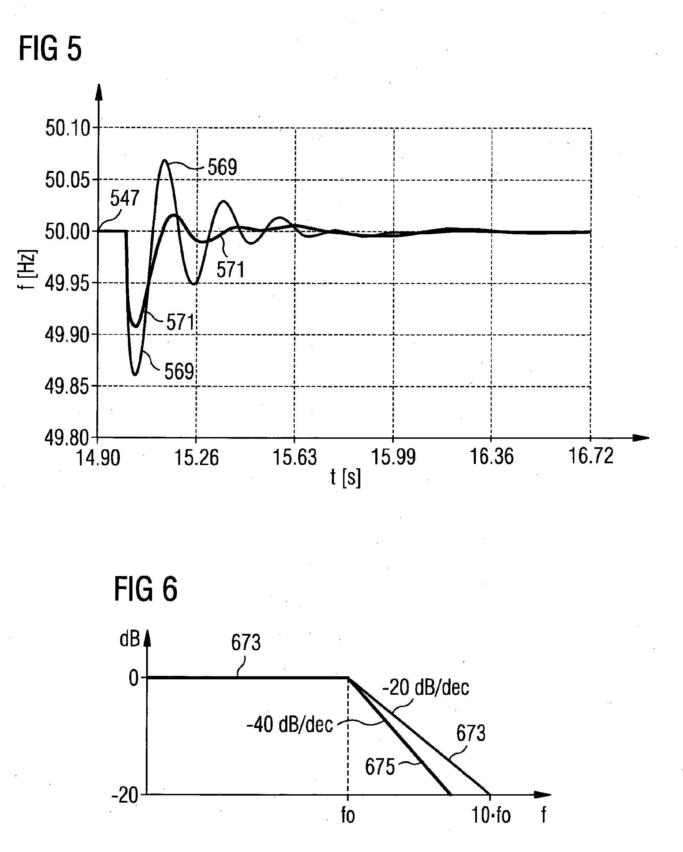

Fig. 5 illustrates a graph showing on its abscissa the time t in seconds and on its ordinate the actual frequency f of the utility grids in Hertz. Thereby, a curve 569 depicts the time course of the actual frequency without performing controlling the power output of the power generation system and the curve 571 denotes the time course of the actual grid frequency when the power of the power generation system is controlled according to an embodiment. In particular, the nominal grid frequency (labelled with reference sign 547) amounts to 50 Hz. As can be seen from Fig. 5 a deviation of the actual grid frequency from the nominal grid frequency 547 is lower when the power output of the power generation system is controlled according to an embodiment (corresponding to curve 571) compared to a case where such a controlling is not performed (corresponding to curve 569).

Fig. 6 illustrates a characteristics of a first order low pass filter employed in the arrangement 100 illustrated in Fig. 1. On an abscissa in Fig. 6 the frequency f is indicated, while on an ordinate the gain of the filter in dB is indicated. Up to a cut-off frequency f₀ the gain 673 stays constant at 0 dB. In the range from f₀ to 10 x f₀ the gain drops with a rate of -20 dB/decade. For comparison a gain curve 675 of a second order low cut filter is illustrated. As can be seen, frequency components in a signal fed through the filter (such as the filter 125, 137 or 139, as illustrated in Fig. 1) which are above the threshold frequency f₀ are attenuated. The cut-off frequencies of the filters 125, 137 and 139 may be different, as explained above.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 100: Arrangement for generating a control signal for controlling a power output of a power generation system
- 101: Input terminal
- 103: Measurement system
- 105: Leg filter
- 107: Control circuit
- 109, 113: Signal lines
- 115: Limiting section or limiting circuit
- 117: Output terminal
- 119: Comparator
- 121: Derivative element
- 123, 133: Switches
- 125: First filter
- 127: Dead band element
- 129, 141, 145: Multiplier
- 131: Adder
- 135: Dead band element
- 137: Second filter
- 139: Third filter
- 143: Integrative element or integrator
- 247, 547: Nominal grid frequency
- 249, 251: Time points
- 353: Converter
- 355: Power controller
- 357: Wind turbine controller
- 359: Input terminal of wind turbine controller
- 361: Output terminal of power controller
- 463: Power generation system
- 466, 467: Communication/control lines
- 465: Power generation plant controller
- 469, 471: Actual grid frequency curves
- 673: Gain curve of cut-off filter of first order
- 675: Gain curve of second order cut-off filter
- f₀: Cut-off frequency
- 700: Part of the arrangement for generating a control signal for controlling a power output of a power generation system in a first mode
- 703: Measurement system
- 715: Limiting section or limiting circuit
- 717: Output terminal
- 721: Derivative element
- 725: First filter
- 727: Dead band element
- 729: Multiplier
- 751: Adder
- 752: Multiplier
- 753: Integrator
- 754: Multiplier
- 800: Part of the arrangement for generating a control signal for controlling a power output of a power generation system in a first mode
- 803: Measurement system
- 815: Limiting section or limiting circuit
- 817: Output terminal
- 821: Derivative element
- 825: First filter
- 827: Dead band element
- 829: Multiplier
- 851: Adder
- 852: Multiplier
- 853: Integrator
- 854: Multiplier
- 900: Wind farm
- 901: Wind farm controller
- 902: Wind turbine
- 1010: Adjusting curve FLM
- 1110: Adjusting curve FSM

## Claims

1. Arrangement (100, 300) for generating a control signal for controlling a power output of a power generation system (463), in particular a wind turbine, wherein the power output is to be supplied to a utility grid, the arrangement comprising:
• an input terminal (101) for receiving an input signal (f_filt) indicative of an actual grid frequency of the utility grid;
• a control circuit (107, 115) for generating the control signal (P_inertia), wherein the control circuit comprises a first circuit (121) for generating a time derivative value of the input signal; and
• an output terminal (117, 317) to which the control signal is supplied,
wherein the control signal depends on the generated time derivative value of the input signal, **characterized by** further comprising a load determination unit for determining a load of the power generation system,
wherein the load determination unit comprises a counter for counting a number of times the control signal caused an increase of the power output of the power generation system.

2. Arrangement according to claim 1, further comprising:
• a first filter (125) connected between the input terminal and the first circuit, wherein the first filter is adapted to attenuate a frequency component of the input signal having a frequency higher than a first threshold frequency (f₀).

3. Arrangement according to claim 2, wherein the input signal indicative of the actual grid frequency of the utility grid is indicative of a deviation (F_error) of the actual grid frequency from a fixed nominal grid frequency (F_ref), wherein the arrangement in particular comprises a comparator (119) for determining the frequency deviation of the actual grid frequency from the fixed nominal grid frequency.

4. Arrangement according to claim 3, wherein the control circuit comprises a second circuit (143) for generating a time integrative value of the input signal, wherein the control signal further depends on the generated time integrative value of the input signal.

5. Arrangement according to claim 4, further comprising:
• a second filter (137) connected between the input terminal and the second circuit, wherein the second filter is adapted to attenuate a frequency component of the input signal having a frequency higher than a second threshold frequency, wherein in particular the second threshold frequency is greater than the first threshold frequency.

6. Arrangement according to one of claims 3 to 5, wherein the control circuit comprises a third circuit (145) for generating a proportional value of the input signal, wherein the control signal further depends on the generated proportional value of the input signal.

7. Arrangement according to claim 6, further comprising:
• a third filter (139) connected between the input terminal and the third circuit, wherein the third filter is adapted to attenuate a frequency component of the input signal having a frequency higher than a third threshold frequency, wherein the third threshold frequency is in particular greater than the first threshold frequency.

8. Arrangement according to one of claims 3 to 7, wherein at least one of the first filter, the second filter and the third filter comprises a low pass filter, in particular a first order analogue filter.

9. Arrangement according to claim 7 or 8, wherein the control signal is based on a weighted sum of the proportional value, the time integrative value and the time derivative value of the input signal, wherein in particular the weighted sum is generated by an adder circuit (131).

10. Arrangement according to one of claims 7 to 9, wherein the arrangement is selectively operable in a first mode and in a second mode, wherein in the first mode a weight of the proportional value of the input signal and a weight of the time integrative value of the input value are both below a weight threshold, while the weight of the time derivative value of the input signal is one, wherein in particular from the derivative value, the integrative value and the proportional value exclusively the derivative value is taken into account for generating the control signal.

11. Arrangement according to one of the preceding claims, further comprising:
• a limiting circuit (115) connected between the control circuit and the output terminal for limiting the control signal to be below a predetermined change per time and/or to be in a predetermined range, wherein the predetermined range is 0.0 to 0.2, in particular 0.0 to 0.1, times a nominal power output of the power generation system.

12. Arrangement according to claim 11, wherein the predetermined range depends on an actual power supplied by the power generation system to the utility grid and/or on a kinetic energy of a mechanical portion of the power generation system.

13. Arrangement according to one of the preceding claims, wherein the arrangement is adapted to communicate with a power generation plant controller (465) controlling a plurality of power generation systems (463), including the power generation system, regarding their power outputs, wherein in particular the control signal is communicated to the power generation plant controller.

14. Arrangement according to one of the preceding claims, wherein the load determination unit is adapted for determining the load of the power generation system based on the control signal and/or based on both a power output and a nominal power output of the power generation system,
wherein in particular the counter is for counting a number of times the control signal caused an increase of the power output of the power generation system above the nominal power output.

15. Power generation system, in particular wind turbine system, for supplying electrical power to a utility grid, the power generation system comprising:
• an arrangement for generating a control signal for controlling a power output of the power generation system according to one of the preceding claims; and
• a generator and/or converter arranged to receive the control signal and to adapt the power output in dependence of the control signal.

## Patentansprüche

1. Anordnung (100, 300) zur Erzeugung eines Steuersignals zur Steuerung einer Leistungsabgabe eines Stromerzeugungssystems (463), insbesondere einer Windenergieanlage, wobei die Leistungsabgabe an ein Versorgungsnetz erfolgt, wobei die Anordnung umfasst:
• eine Eingangsklemme (101) zum Empfangen eines Eingangssignals (f_filt), das für eine Ist-Netzfrequenz des Versorgungsnetzes indikativ ist;
• eine Steuerschaltung (107, 115) zum Erzeugen des Steuersignals (P_inertia), wobei die Steuerschaltung eine erste Schaltung (121) zum Erzeugen eines Zeitableitungswertes des Eingangssignals umfasst; und
• eine Ausgangsklemme (117, 317), welcher das Steuersignal zugeführt wird,
wobei das Steuersignal von dem erzeugten Zeitableitungswert des Eingangssignals abhängt,
**dadurch gekennzeichnet, dass** sie ferner eine Lastbestimmungseinheit zum Bestimmen einer Last des Stromerzeugungssystems umfasst,
wobei die Lastbestimmungseinheit einen Zähler zum Zählen, wie oft das Steuersignal eine Erhöhung der Leistungsabgabe des Stromerzeugungssystems verursacht hat, umfasst.

2. Anordnung nach Anspruch 1, welche ferner umfasst:
• ein erstes Filter (125), das zwischen die Eingangsklemme und die erste Schaltung geschaltet ist, wobei das erste Filter dazu eingerichtet ist, eine Frequenzkomponente des Eingangssignals zu dämpfen, die eine Frequenz aufweist, welche höher als eine erste Schwellenwertfrequenz (f₀) ist.

3. Anordnung nach Anspruch 2, wobei das Eingangssignal, das für die Ist-Netzfrequenz des Versorgungsnetzes indikativ ist, für eine Abweichung (F_error) der Ist-Netzfrequenz von einer festen Nenn-Netzfrequenz (F_ref) indikativ ist, wobei die Anordnung insbesondere einen Komparator (119) zum Bestimmen der Frequenzabweichung der Ist-Netzfrequenz von der festen Nenn-Netzfrequenz umfasst.

4. Anordnung nach Anspruch 3, wobei die Steuerschaltung eine zweite Schaltung (143) zum Erzeugen eines Zeitintegralwertes des Eingangssignals umfasst, wobei das Steuersignal ferner von dem erzeugten Zeitintegralwert des Eingangssignals abhängt.

5. Anordnung nach Anspruch 4, welche ferner umfasst:
• ein zweites Filter (137), das zwischen die Eingangsklemme und die zweite Schaltung geschaltet ist, wobei das zweite Filter dazu eingerichtet ist, eine Frequenzkomponente des Eingangssignals zu dämpfen, die eine Frequenz aufweist, welche höher als eine zweite Schwellenwertfrequenz ist, wobei insbesondere die zweite Schwellenwertfrequenz größer als die erste Schwellenwertfrequenz ist.

6. Anordnung nach einem der Ansprüche 3 bis 5, wobei die Steuerschaltung eine dritte Schaltung (145) zum Erzeugen eines proportionalen Wertes des Eingangssignals umfasst, wobei das Steuersignal ferner von dem erzeugten proportionalen Wert des Eingangssignals abhängt.

7. Anordnung nach Anspruch 6, welche ferner umfasst:
• ein drittes Filter (139), das zwischen die Eingangsklemme und die dritte Schaltung geschaltet ist, wobei das dritte Filter dazu eingerichtet ist, eine Frequenzkomponente des Eingangssignals zu dämpfen, die eine Frequenz aufweist, welche höher als eine dritte Schwellenwertfrequenz ist, wobei die dritte Schwellenwertfrequenz insbesondere größer als die erste Schwellenwertfrequenz ist.

8. Anordnung nach einem der Ansprüche 3 bis 7, wobei das erste Filter, das zweite Filter und/oder das dritte Filter ein Tiefpassfilter umfasst, insbesondere ein Analogfilter erster Ordnung.

9. Anordnung nach Anspruch 7 oder 8, wobei das Steuersignal auf einer gewichteten Summe des proportionalen Wertes, des Zeitintegralwertes und des Zeitableitungswertes des Eingangssignals basiert, wobei insbesondere die gewichtete Summe von einer Addierschaltung (131) erzeugt wird.

10. Anordnung nach einem der Ansprüche 7 bis 9, wobei die Anordnung selektiv in einer ersten Betriebsart und in einer zweiten Betriebsart betreibbar ist, wobei in der ersten Betriebsart ein Gewicht des proportionalen Wertes des Eingangssignals und ein Gewicht des Zeitintegralwertes des Eingangssignals beide unter einem Gewichtsschwellenwert liegen, während das Gewicht des Zeitableitungswertes des Eingangssignals eins ist, wobei insbesondere von dem Ableitungswert, dem Integralwert und dem proportionalen Wert ausschließlich der Ableitungswert für die Erzeugung des Steuersignals berücksichtigt wird.

11. Anordnung nach einem der vorhergehenden Ansprüche, welche ferner umfasst:
• eine Begrenzungsschaltung (115), die zwischen die Steuerschaltung und die Ausgangsklemme geschaltet ist, zum Begrenzen des Steuersignals, so dass es eine vorbestimmte Änderung pro Zeiteinheit nicht überschreitet und/oder in einem vorbestimmten Bereich liegt, wobei der vorbestimmte Bereich der Bereich vom 0,0- bis 0,2-fachen, insbesondere vom 0,0- bis 0,1-fachen einer Nenn-Leistungsabgabe des Stromerzeugungssystems ist.

12. Anordnung nach Anspruch 11, wobei der vorbestimmte Bereich von einer Istleistung, die dem Versorgungsnetz durch das Stromerzeugungssystem zugeführt wird, und/oder von einer kinetischen Energie eines mechanischen Abschnitts des Stromerzeugungssystems abhängt.

13. Anordnung nach einem der vorhergehenden Ansprüche, wobei die Anordnung dazu eingerichtet ist, mit einer Stromerzeugungsanlagen-Steuereinrichtung (465) zu kommunizieren, die eine Vielzahl von Stromerzeugungssystemen (463), darunter das Stromerzeugungssystem, hinsichtlich ihrer Leistungsabgaben steuert, wobei insbesondere das Steuersignal der Stromerzeugungsanlagen-Steuereinrichtung übermittelt wird.

14. Anordnung nach einem der vorhergehenden Ansprüche, wobei die Lastbestimmungseinheit dazu eingerichtet ist, die Last des Stromerzeugungssystems auf der Basis des Steuersignals und/oder auf der Basis sowohl einer Leistungsabgabe als auch einer Nenn-Leistungsabgabe des Stromerzeugungssystems zu bestimmen,
wobei insbesondere der Zähler zum Zählen, wie oft das Steuersignal eine Erhöhung der Leistungsabgabe des Stromerzeugungssystems über die Nenn-Leistungsabgabe hinaus verursacht hat, bestimmt ist.

15. Stromerzeugungssystem, insbesondere Windenergieanlagensystem, zum Zuführen elektrischer Leistung zu einem Versorgungsnetz, wobei das Stromerzeugungssystem umfasst:
• eine Anordnung zur Erzeugung eines Steuersignals zum Steuern einer Leistungsabgabe des Stromerzeugungssystems nach einem der vorhergehenden Ansprüche; und
• einen Generator und/oder Umsetzer, der dafür eingerichtet ist, das Steuersignal zu empfangen und die Leistungsabgabe in Abhängigkeit von dem Steuersignal anzupassen.

## Revendications

1. Un agencement (100, 300) destiné à la génération d'un signal de commande pour la commande d'une production d'énergie d'un système de génération d'énergie (463), plus particulièrement une turbine éolienne, la production d'énergie étant destinée à être fournie à un réseau de distribution électrique, l'agencement comprenant :
• un terminal d'entrée (101) destiné à la réception d'un signal d'entrée (f_filt) indicatif d'une fréquence de réseau de distribution réelle du réseau de distribution électrique,
• un circuit de commande (107, 115) destiné à la génération du signal de commande (P_inertia), le circuit de commande comprenant un premier circuit (121) destiné à la génération d'une valeur de dérivée temporelle du signal d'entrée, et
• un terminal de sortie (117, 317) auquel le signal de commande est fourni,
dans lequel le signal de commande dépend de la valeur de dérivée temporelle générée du signal d'entrée, **caractérisé en ce que**
il comprend en outre une unité de détermination de charge pour la détermination d'une charge du système de génération d'énergie,
dans lequel l'unité de détermination de charge comprend un compteur destiné à décompter un nombre de fois où le signal de commande a provoqué une augmentation de la production d'énergie du système de génération d'énergie.

2. L'agencement selon la revendication 1, comprenant en outre :
• un premier filtre (125) raccordé entre le terminal d'entrée et le premier circuit, le premier filtre étant adapté de façon à atténuer une composante de fréquence du signal d'entrée possédant une fréquence plus élevée qu'une première fréquence seuil (f₀).

3. L'agencement selon la revendication 2, dans lequel le signal d'entrée indicatif de la fréquence de réseau de distribution réelle du réseau de distribution électrique est indicatif d'un écart (F_error) de la fréquence de réseau de distribution réelle à partir d'une fréquence de réseau de distribution nominale fixe (F_ref), l'agencement comprenant plus particulièrement un comparateur (119) pour la détermination de l'écart de fréquence de la fréquence de réseau de distribution réelle à partir de la fréquence de réseau de distribution nominale fixe.

4. L'agencement selon la revendication 3, dans lequel le circuit de commande comprend un deuxième circuit (143) destiné à la génération d'une valeur d'intégration temporelle du signal d'entrée, le signal de commande dépendant en outre de la valeur d'intégration temporelle générée du signal d'entrée.

5. L'agencement selon la revendication 4, comprenant en outre :
• un deuxième filtre (137) raccordé entre le terminal d'entrée et le deuxième circuit, le deuxième filtre étant adapté de façon à atténuer une composante de fréquence du signal d'entrée possédant une fréquence plus élevée qu'une deuxième fréquence seuil, la deuxième fréquence seuil étant plus particulièrement plus élevée que la première fréquence seuil.

6. L'agencement selon l'une quelconque des revendications 3 à 5, dans lequel le circuit de commande comprend un troisième circuit (145) destiné à la génération d'une valeur proportionnelle du signal d'entrée, le signal de commande dépendant en outre de la valeur proportionnelle générée du signal d'entrée.

7. L'agencement selon la revendication 6, comprenant en outre :
• un troisième filtre (139) raccordé entre le terminal d'entrée et le troisième circuit, le troisième filtre étant adapté de façon à atténuer une composante de fréquence du signal d'entrée possédant une fréquence plus élevée qu'une troisième fréquence seuil, la troisième fréquence seuil étant plus particulièrement plus élevée que la première fréquence seuil.

8. L'agencement selon l'une quelconque des revendications 3 à 7, dans lequel au moins un filtre parmi le premier filtre, le deuxième filtre et le troisième filtre comprend un filtre passe bas, plus particulièrement un filtre analogique de premier ordre.

9. L'agencement selon la revendication 7 ou 8, dans lequel le signal de commande est basé sur une somme pondérée de la valeur proportionnelle, de la valeur d'intégration temporelle et de la valeur de dérivée temporelle du signal d'entrée, la somme pondérée étant plus particulièrement générée par un circuit additionneur (131).

10. L'agencement selon l'une quelconque des revendications 7 à 9, dans lequel l'agencement est utilisable de manière sélective dans un premier mode et dans un deuxième mode, dans lequel, dans le premier mode, un poids de la valeur proportionnelle du signal d'entrée et un poids de la valeur d'intégration temporelle de la valeur d'entrée sont tous les deux sous un seuil de poids, tandis que le poids de la valeur de dérivée temporelle du signal d'entrée est un, où plus particulièrement parmi la valeur dérivée, la valeur d'intégration et la valeur proportionnelle, exclusivement la valeur dérivée est prise en compte pour la génération du signal de commande.

11. L'agencement selon l'une quelconque des revendications précédentes, comprenant en outre :
• un circuit de limitation (115) raccordé entre le circuit de commande et le terminal de sortie destiné à limiter le signal de commande de façon à être sous un changement prédéterminé par unité de temps et/ou de façon à être dans une plage prédéterminée, la plage prédéterminée étant de 0,0 à 0,2, plus particulièrement de 0,0 à 0,1, fois une production d'énergie nominale du système de génération d'énergie.

12. L'agencement selon la revendication 11, dans lequel la plage prédéterminée dépend d'une énergie réelle fournie par le système de génération d'énergie au réseau de distribution électrique et/ou d'une énergie cinétique d'une partie mécanique du système de génération d'énergie.

13. L'agencement selon l'une quelconque des revendications précédentes, dans lequel l'agencement est adapté de façon à communiquer avec un dispositif de commande de centrale de génération d'énergie (465) commandant une pluralité de systèmes de génération d'énergie (463), y compris le système de génération d'énergie, concernant leurs productions d'énergie, le signal de commande étant plus particulièrement communiqué au dispositif de commande de centrale de génération d'énergie.

14. L'agencement selon l'une quelconque des revendications précédentes, dans lequel l'unité de détermination de charge est adaptée de façon à déterminer la charge du système de génération d'énergie en fonction du signal de commande et/ou en fonction à la fois d'une production d'énergie et d'une production d'énergie nominale du système de génération d'énergie,
le compteur étant plus particulièrement destiné à décompter un nombre de fois où le signal de commande a provoqué une augmentation de la production d'énergie du système de génération d'énergie supérieure à la production d'énergie nominale.

15. Un système de génération d'énergie, plus particulièrement un système à turbine éolienne, destiné à la fourniture d'une énergie électrique à un réseau de distribution électrique, le système de génération d'énergie comprenant :
• un agencement destiné à la génération d'un signal de commande pour la commande d'une production d'énergie du système de génération d'énergie selon l'une quelconque des revendications précédentes, et
• un générateur et/ou un convertisseur agencé de façon à recevoir le signal de commande et de façon à adapter la production d'énergie en fonction du signal de commande.
